# EUROPÄISCHE PATENTSCHRIFT

(11) **EP 0 836 038 B1**
(45) Veröffentlichungstag und Bekanntmachung des Hinweises auf die Patenterteilung: **21.11.2001**
(21) Anmeldenummer: 97116345.6
(22) Anmeldetag: 19.09.1997
(51) Int. Cl.: F16H 59/02, B60K 20/04

(54) **Abdeck-Platte für die Öffnung einer Schaltaggregatverkleidung eines Automatikgetriebes eines Kraftfahrzeuges**
Cover plate for the opening of a gear shift unit or automatic transmissions in vehicles
Panneau de couverture pour l'ouverture d'un dispositif de commande de transmission automatique de véhicules

(30) Priorität: 10.10.1996 DE 19641705
(43) Veröffentlichungstag der Anmeldung: 15.04.1998
(73) Patentinhaber: DaimlerChrysler AG, 70567 Stuttgart (DE)
(72) Erfinder: Futschik, Hans-Dieter, 75391 Gechingen (DE); Nienhaus, Ulrich, 72202 Nagold (DE); Weber, Norbert, 71149 Bondorf (DE)

(56) Entgegenhaltungen:
- EP-A- 0 698 755
- DE-A- 19 535 825

## Beschreibung

Die Erfindung betrifft eine Abdeck-Platte für die Öffnung einer Schaltaggregatverkleidung eines Automatik-Getriebes eines Kraftfahrzeuges nach dem Oberbegriff des Patentanspruchs 1.

Der Wählhebel des Automatikgetriebes wird in der Abdeck-Platte in einer Kulisse geführt, deren Führungsbahn synchron zu derjenigen der Führung des Wählhebels in dem Schaltaggregat ausgerichtet sein muß. Da das Schaltaggregat und dessen Verkleidung, die beispielsweise die Mittelkonsole eines Fahrzeuges ist, getrennt gelagert sind, müssen zwischen der Abdeck-Platte und dem Randbereich der Öffnung der Verkleidung, die von der Abdeck-Platte zu verschließen ist, Toleranzen ausgeglichen werden.

Bei einer aus EP 0698755 A2 bekannten gattungsgemäßen Abdeck-Platte können in horizontaler Richtung Toleranzen gegenüber der Verkleidung ausgeglichen werden.

Die Erfindung beschäftigt sich mit dem Problem, zusätzlich auch noch Toleranzen in lotrechter Richtung, d.h. in Richtung der Fahrzeughochachse, ausgleichen zu können. Darüber hinaus soll die zu schaffende Ausführung rationell und kostengünstig hergestellbar sowie optisch ansprechend sein.

Gelöst wird dieses Problem erfindungsgemäß durch eine Gestaltung nach den kennzeichnenden Merkmalen des Patentanspruchs 1.

Bei einer solchen Ausführung können ohne weiteres optisch nicht mehr wahrnehmbare Toleranzen von etwa 2 bis 3 mm in allen Richtungen zwischen der Abdeck-Platte und der Verkleidung ausgeglichen werden. Bei der Abdeckung handelt es sich praktisch um eine "schwimmende" Abdeckung der beispielsweise als Mittelkonsole dienenden Verkleidung des Schaltaggregates eines Automatikgetriebes. Das auch als Schaltblock bezeichnete Schaltaggregat dient als Ausgangsbasis für die Lage der Abdeck-Platte sowie die diese umgebende Verkleidung. Die Abdeck-Platte muß fest mit dem Schaltaggregat verbunden sein, da eine in diesem vorhandene Schaltkulisse für den Wählhebel synchron zu der Kulisse in der Abdeckung ausgerichtet sein muß. Die Kulisse in der Abdeckung muß eine geometrisch übereinstimmende Abbildung der Wählhebel-Kulisse in dem Schaltaggregat darstellen. Lageabweichungen zwischen der Öffnung der als Mittelkonsole dienenden Verkleidung des Schaltaggregates und der durch das Schaltaggregat vorgegebenen Lage der Abdeck-Platte können durch die erfindungsgemäße Ausführung einfach und unauffällig ausgeglichen werden. Dabei ist es zweckmäßig, den Rand der Abdeck-Platte mit einem Radius abzurunden, um dadurch eine unauffällige Schattenfuge bei ggf. örtlich verbleibenden Spaltabständen zwischen der Abdeck-Platte und der Verkleidung zu erreichen.

Durch das im Bereich des gewölbten Randes der Abdeck-Platte vorgesehene elastische Material, beispielsweise ein relativ elastischer Kunststoff sowie eine umlaufende Einlage aus einem steiferen Material kann der Rand der Abdeck-Platte an der Anlagefläche mit einer erforderlichen Andrückkraft abdekkungssicher aufliegen.

Um eine ausreichend große Verformbarkeit des Randes zu ermöglichen, ist zwischen dem gewölbten Rand und dem an die Kulissen-Öffnung sowie eventuelle weitere Öffnungen der Abdeck-Platte angrenzenden Bereich, der als relativ steifer Rahmen ausgebildet ist, eine Materialeinschnürung vorgesehen. Dabei kann diese Materialeinschnürung zweckmäßigerweise in der Art eines Filmscharniers ausgebildet sein.

Die die Anlage unterstützenden Einlagen in dem gewölbten Rand der Abdeck-Platte sind vorteilhafterweise Ziermaterialien wie beispielsweise Chrom, Holz oder farbig lackierte Kunststoffteile. Einlagen zur insbesonderen Versteifung der Abdeck-Platte im Umrandungsbereich der Öffnungen der Abdeck-Platte können ebenfalls vorgesehen sein und vorteilhafterweise gleichfalls Zierteile aus den vorgenannten Materialien sein.

Die in dem gewölbten Rand der Abdeck-Platte vorzusehenden Einlagen können die Auflagekraft des Randes auf die Anlagefläche tellerfederartig ausüben.

Ausführungsbeispiele der Erfindung sind in der Zeichnung dargestellt.

Es zeigen
- Fig. 1: eine perspektivische Draufsicht auf eine Abdeck-Platte mit unter anderem einer Schaltkulisse für den Wählhebel eines Automatikgetriebes eines Kraftfahrzeuges,
- Fig. 2: einen Schnitt durch die Abdeck-Platte nach Linie II-II in Fig. 1,
- Fig. 3: einen Schnitt durch die Abdeck-Platte nach Linie III-III Fig. 1, wobei die Abdeck-Platte ein kompaktes einstückiges Teil ist.

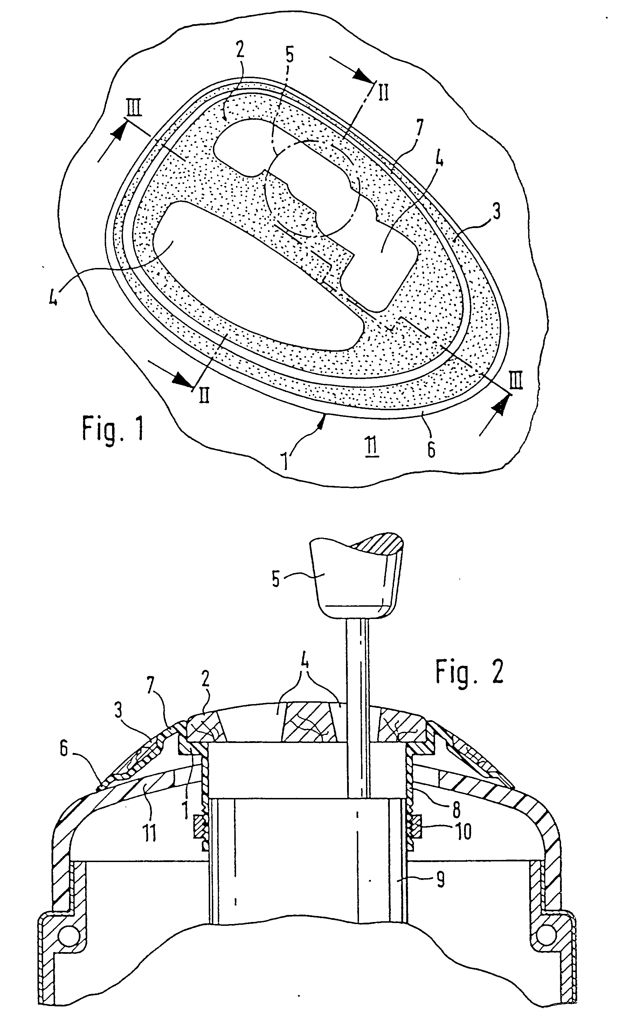

Bei der Abdeck-Platte nach Fig. 1 sind an einem Grundkörper 1 aus flexiblem Kunststoff Bereiche mit Dekorteilen aus beispielsweise Holz versehen. Diese Dekorteile 2 und 3 stellen fest mit dem Grundkörper 1 verbundene Einlagen dar. Das Dekorteil 2 ist eine Art steife Platte im Umfangsbereich der Kulissenöffnung 4 zur Aufnahme eines Wählhebels 5. Eine benachbarte Öffnung 4 dient zur Aufnahme von Darstellungsmitteln für eine Ganganzeige.

Der Rand der Abdeckplatte ist umlaufend um diese gewölbt und besitzt radial außen einen von dem flexiblen Material des Grundkörpers 1 gebildeten Auflage-Randbereich 6. Nach radial innen grenzt an diesen Rand 6 das umlaufende Dekorteil 3 an. Zwischen diesem Dekorteil 3 und dem Dekorteil 2 existiert ein ausschließlich von dem Material des Grundkörpers 1 gebildeter Zwischenraum 7. In diesem Zwischenraum-Bereich ist das Grundkörper-Material filmscharnierartig eingeschnürt, wodurch der gewölbte Rand der Abdeck-Platte eine gewisse Flexibilität erhält. Hierdurch wird diese Flexibilität unter Erzielung einer Anlagekraft für den Auflage-Randbereich 6 begrenzt.

Befestigt ist die Abdeckplatte gemäß der Ausführung in Fig. 2 über von dieser ausgehende Steg 8 an einem den Wählhebel 5 führenden Schaltaggregat bzw. Schaltblock 9. Die Verbindung zwischen den Stegen 8 und dem Schaltaggregat 9 ist eine Spannverbindung und wird dadurch erzielt, das an dem Ende der Stege 8 jeweils ein Sägezahnprofil vorgesehen ist, mit dem die Stege 8 in klemmend wirkende Ösen 10 eingespannt werden.

Mit dem Auflage-Randbereich 6 kommt die Abdeck-Platte auf einer Karosserieseitig aufgesteckten Verkleidung 11 zu liegen. Diese Verkleidung 11 besitzt eine dem Auflage-Randbereich 6 zugewandte sphärisch in Längs- und Querrichtung ungleich ausgebildete nach außen gewölbte Auflagefläche. Durch die erfindungsgemäße Ausführung des gewölbten Randbereiches der Abdeckplatte kann sich deren Auflage-Randbereich 6 dieser ungleich sphärischen Anlagefläche auch bei Toleranzverschiebungen zwischen den Sollagen der Abdeckplatte und der Verkleidung 11 jeweils spaltlos an die Verkleidung 11 anpassen.

Die Dekorteile 2 und 3 können aus insbesondere Edelholz oder Chrom bestehen oder farbig lackierte Kunststoffteile sein. Dabei kann das Dekorteil 3 eine Art Chrom-, Holz- oder Kunststoffring sein, durch den jeweils in der Art eines Tellerfedereffektes eine Andrückkraft auf den praktisch als Dichtlippe wirkenden gewölbten Rand der Abdeck-Platte erzeugt wird.

Die Dekorteile 2 und 3 können an dem Grundkörper 1 auswechselbar sein, um dadurch verschiedenartig wirkende Abdeck-Platten zu erhalten. Auch das Material des Grundkörpers 1 kann an den nach außen sichtbaren Stellen unterschiedliche Farben und Strukturen aufweisen.

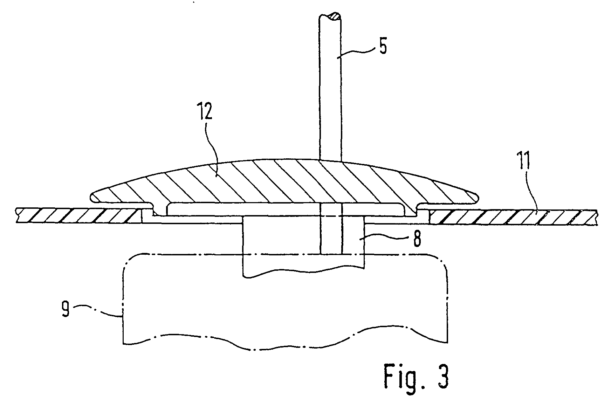

Bei der Ausführung der Erfindung nach Fig. 3 ist der Randbereich der Öffnung der Verkleidung 11, der durch eine einstükkige Abdeck-Platte 12 zu verschließen ist, im wesentlichen eben. Dadurch kann die Abdeck-Platte 12 in diesem Fall mit Maßtoleranzen derart eingebaut werden, daß sie den Öffnungs-Randbereich der Verkleidung jeweils mit Spiel überdeckt. Die Überdeckung ist in allen Richtungen derart, daß ein Ausgleich möglicher Toleranzen in einer Größenordnung von bis zu etwa 3 mm ohne weiteres möglich ist, ohne optisch aufzufallen. Der Randbereich der Abdeckplatte 12 nach Fig. 3 ist mit einem Radius versehen, um dadurch eine wenig sichtbare Schattenfuge zu erzeugen, wenn die Abdeckplatte 12 mit vertikalem Abstand gegenüber der Verkleidung 11, das heißt der Mittelkonsole des Fahrzeuges, eingebaut ist. Die einstückige Abdeckplatte 12 ersetzt bei der Ausführung nach Fig. 3 diejenige, die sich bei der Ausführung nach Fig. 1 aus den Teilen 1, 2, 3 und 6 zusammensetzt.

## Patentansprüche

1. Abdeck-Platte (12) für die Öffnung einer Verkleidung (11) eines Schaltaggregates (9), bei der der Öffnungsrandbereich gewölbt ist, mit einer in der Abdeck-Platte vorgesehenen Kulisse (4) zur Aufnahme eines in dieser zu bewegenden, an dem Schaltaggregat (9) gelagerten Wählhebels (5) eines Automatikgetriebes eines Kraftfahrzeuges, wobei die Abdeck-platte mit dem Schaltaggregat (9) verbunden ist und den Randbereich der Öffnung der Verkleidung (11) mit Spiel über einen - Maßtoleranzen zwischen den Einbaulagen der Verkleidung (11) und des Schaltaggregates (9) berücksichtigenden Überdeckungsbereich abdeckt,
**dadurch gekennzeichnet,**
**daß** die Abdeck-Platte (12) eine Rosette mit einem gewölbten Rand ist und aus einem Grundkörper (1) aus elastischem Grundmaterial mit einer im gewölbten Randbereich umlaufenden Einlage (3) aus weniger elastischem Material besteht und an dem Schaltaggregat (9) über in Richtung der Fahrzeughochachse gegeneinander verstellbare Fixiermittel (8,10) befestigt ist.

2. Abdeck-Platte nach Anspruch 1,
**dadurch gekennzeichnet,**
**daß** die Rosette im gemeinsamen Umrandungsbereich der Öffnungen als über eine Materialeinschnürung (7) in den gewölbten Rand übergehender Rahmen ausgebildet ist.

3. Abdeck-Platte nach Anspruch 2,
**dadurch gekennzeichnet,**
**daß** die Materialeinschnürung (7) filmscharnierartig gestaltet ist.

4. Abdeck-Platte nach einem der Ansprüche 1 bis 3,
**dadurch gekennzeichnet,**
**daß** die Einlage (3) in dem gewölbten Randbereich ein nach außen sichtbares Dekorteil ist.

## Claims

1. Covering plate (12) for the opening of a panel (11) of a shift aggregate (9), wherein the opening edge area is cambered, with a slide (4) provided in the covering plate for receiving a selector lever (5) of an automatic transmission of a motor vehicle to be moved therein and mounted on the shift aggregate (9), wherein the covering plate is connected with the shift aggregate (9) and covers the edge area of the opening of the panel (11) with clearance via an overlap area, which takes into consideration mass tolerances between the installation positions of the panel (11) and the shift aggregate (9),
**characterised in that**
the covering plate (12) is a rosette with a cambered edge and consists of a body (1) made from elastic base material with a liner (3) made from less elastic material round the cambered edge area and is fixed on the shift aggregate (9) via fixing means (8, 10) adjustable in relation to each other in the direction of the vehicle high axis.

2. Covering plate according to Claim 1
**characterised in that**
the rosette is formed in the common border area of the openings as a frame going into the cambered edge via a material necking (7).

3. Covering plate according to Claim 2
**characterised in that**
the material necking (7) is in the form of an integral hinge.

4. Covering plate according to one of the Claims 1 to 3
**characterised in that**
the liner (3) in the cambered edge area is a décor component which is externally visible.

## Revendications

1. Panneau de couverture (12) pour l'ouverture d'un carénage (11) d'un sous-ensemble de sélection (9), dans lequel la zone de bordure de l'ouverture est bombée, comportant une coulisse (4), prévue dans le panneau de couverture, pour recevoir un levier de sélection (5), qui est à déplacer dans cette coulisse et qui est porté sur le sous-ensemble de sélection (9), d'une boîte de vitesses automatique d'un véhicule à moteur, le panneau de couverture étant relié au sous-ensemble de sélection (9) et recouvrant la zone de bordure de l'ouverture du carénage (11) avec un jeu sur une zone de recouvrement - en tenant compte des tolérances de cote entre les positions de montage du carénage (11) et du sous-ensemble de sélection (9)
**caractérisé par le fait**
**que** le panneau de couverture (12) est une galette à bordure bombée et qu'il est constitué d'un élément de base (1) en un matériau de base élastique avec une garniture périphérique insérée dans la zone de bordure bombée et constituée d'un matériau moins élastique et qu'il est fixé au sous-ensemble de sélection (9) par des moyens de fixation (8, 10) réglables l'un par rapport à l'autre selon la direction de l'axe vertical du véhicule.

2. Panneau de couverture selon la revendication 1,
**caractérisé par le fait**
**que** dans la zone de bordure périphérique commune des ouvertures, la galette est conçue sous forme d'un cadre se transformant en la bordure bombée en passant par un rétrécissement du matériau (7).

3. Panneau de couverture selon la revendication 1,
**caractérisé par le fait**
**que** le rétrécissement du matériau (7) est réalisé sous forme d'une charnière en film.

4. Panneau de couverture selon l'une des revendications 1 à 3,
**caractérisé par le fait**
**que** la garniture (3) dans la zone de bordure bombée est une partie formant décor visible de l'extérieur.
